# EUROPEAN PATENT APPLICATION

(11) **EP 1 063 243 A2**
(43) Date of publication of application: **27.12.2000**
(21) Application number: 00111927.0
(22) Date of filing: 15.06.2000
(51) Int. Cl.: C08F 210/16, C08F 210/18, C08F 4/646

(54) **Olefin polymerization process and catalyst system therefor**

(30) Priority: 23.06.1999 CA 2276282
(71) Applicant: BAYER AG, 51368 Leverkusen (DE); Bayer Inc., Sarnia, ON N7T 7M2 (CA)
(72) Inventor: Zahalka, Hayder, Dr., Sarnia, Ontario N7S 4Y8 (CA); Becke, Sigurd, Dr., 51503 Rösrath (DE); Mager, Michael, Dr., 51375 Leverkusen (DE)
(74) Representative: Feldhues, Michael L.F., Dr.

(57) **Abstract**

A novel olefin polymerization process and catalyst system are described. The catalyst system comprises: a transition metal compound, an organometallic compound and a dendrimeric compound. The invention is particularly suitable for slurry polymerization of olefin monomers to produce a polymer having advantageous and desirable properties.

## Description

### BACKGROUND OF THE INVENTION

### FIELD OF THE INVENTION

The present invention relates to an olefin polymerization process and a catalyst system therefor. More particularly, in one of its aspects, the present invention relates to the preparation of ethylene-propylene-copolymers, optionally containing one ore more diolefins, under slurry polymerization conditions using an alumoxane-free catalyst system comprising cyclopentadiene compounds in combination with dendrimeric compounds as cocatalysts.

### DESCRIPTION OF THE PRIOR ART

Copolymers of ethylene and propylene (EPM), and terpolymers of ethylene, propylene, and non-conjugated diene (EPDM) make up a large segment of polyolefin polymers in industry. Many EPM and EPDM grades are available on the market. The basic differences between EPDM types are: (1) ethylene content, (2) third monomer, type and level, and (3) molecular weight. Grades of EPDM with high ethylene content have higher tensile and tear strength, increased hardness, improved abrasion resistance and better heat resistance. These types of EPDM typcially are used in blends with polypropylene and polyethylene in order to improve the impact system strength of the polyolefin. Some applications for the rubber modified plastic, thermoplastic olefins, are automotive bumpers, toys and packaging films. Another large segment for high ethylene grades is in extrusion and injection moulding, for example the following automotive applications: weatherstrips, profiles, seals, and high temperature hoses. On the other hand, increasing the ethylene content negatively affects the rubber's cold resistance and the compression set. Grades of EPDM with low ethylene content are employed in various applications, such as gaskets and building profiles where the rubber should retain high elastic sealing forces over a wide temperature range, and have low compression set.

The conventional third monomers currently used in the commercial productions of EPDM polymers include: ethylidene norbornene (ENB), 1,4-hexadiene (1,4-HD) and dicyclopentadiene (DCPD). The ENB based EPDM's exhibit much faster cure rate in sulpher vulcanization relative to both DCPD- and 1,4-HD-based EPDM.

Since conventional EPDM typically has low crystallinity, it is highly soluble in saturated hydrocarbon solutions. For this reason, most of the conventional processes used to produce EPDM are solution-based. In these conventional processes, very homogeneous polymerization conditions can be maintained as long as the solution viscosity is kept low. At high solution viscosities, mixing becomes difficult and mass transfer limitations occur, resulting in the occurrence of concentration gradients.

In a slurry-based process, the EPDM is precipitated in a non-reacting diluent. The reaction medium is essentially formed by an excess of the liquid propylene which acts as a polymerization diluent, and the polymer is formed as a solid precipitant suspended in the liquid phase. A slurry process offers a number of advantages over a solution process, namely: no stirring viscosity problems; very homogeneous reaction medium; easier removal of the reaction heat; increased reactor throughput owing to higher concentration of the polymer in the medium; higher polymerization yields; capability of producing very high molecular weight (MW) polymers; energy savings for the recovery of the polymer; lower investment costs and lower production costs.

The uniqueness of the slurry polymerization technology is the ability to produce very high MW polymers with narrow molecular weight distribution (MWD). The very high MW EPDM grade are able to accept large amounts of oil and fillers which improve the rubber processability and give the opportunity for highly filled compounds, i.e., good physical properties at low compound cost. Moreover, very high MW and narrow MWD give good shape retention while hot. In addition to the properties mentioned above, these EPDM grades provide better physical properties to the end products, such as optimum tear and tensile strength (at room and elevated temperatures), excellent resilience and low compression set.

In most current EPDM production processes, the catalysts used for production of high MW EPDM elastomers are soluble catalysts formed from vanadium compounds such as vanadium tetrachloride, vanadyl trichloride, vanadium acetylacetonate, or a vanadyl trialkoxy compound in conjunction with an organoaluminum compound. However, vanadium catalyst systems are sensitive toward overreduction resulting in production of an inactive vanadium species. In order to improve catalyst productivity, chlorinated hydrocarbon promotors have to be used to achieve reoxidation of vanadium back to an active oxidation state. Further, since the activity of vanadium compound catalysts are generally low, removal of catalyst residue from the product is needed for certain applications.

In recent years, special catalysts have been developed which are active in olefin polymerization. Examples of the catalysts are combinations of bis(cyclopentadienyl) compounds (also known as "Ametallocenes@") of a metal such as titanium, zirconium, and hafnium with alumoxanes.

Some effort has been made to determine the suitability of metallocene/alumoxane catalyst systems for the production of EPDM elastomers in a slurry process.

United States patent 5,001,205 discloses a process for producing an ethylene/alpha-olefin elastomer in slurry polymerization, utilizing a zirconocene/alumoxane catalyst supported on a silica gel support. United States patent 4,871,705 discloses a pre-polymerized catalyst for producing ethylene/propylene elastomers in liquid olefin slurry polymerization, comprising an inorganic support which has been treated with an alumoxane followed by addition of a zirconocene followed by a pre-polymerization treatment with ethylene or an α-olefin. Published European patent application 0,347,129A discloses a process for producing an EPDM elastomer in slurry polymerization, utilizing a zirconocene/alumoxane catalyst supported on a silica gel support. Most preferably, the aforementioned prior art processes are carried out utilizing zirconocene/methylalumoxane (MAO) catalysts in supported form. Indeed, in order to produce ethylene/propylene elastomers of commercially acceptable properties bis(cyclopentadienyl) group IVB transition meal (titanium, zirconium, hafnium) compounds have to be used with an aluminoxane in a supported form of catalyst.

Catalyst systems based on monocyclopentadienyl transition metal compounds activated with alumoxane suitable for the preparation of ethylene/alpha-olefin copolymers of high molecular weight and high α-olefin content are described in United States patent 5,264,405.

Catalyst systems based on metallocenes and alumoxanes have considerable disadvantages, however. Thus, alumoxanes, particularly MAOs, cannot be produced with a high degree of reproducibility, either *in situ* or in a pre-forming process. MAO is a mixture of various aluminiumalkyl-containing species existing in equilibrium with each other, which results in a loss of reproducibility during the polymerization of olefinic compounds. Moreover, MAO is not stable on storage and its composition changes when subjected to thermal loading. A further serious disadvantage is the considerable excess of MAO which is necessary for the activation of metallocenes. However, this high MAO/metallocene ratio is a prerequisite for obtaining high catalytic activities. This results in a crucial process disadvantage, however, since aluminum compounds have to be separated from the polymers during work-up. Furthermore, MAO is a cost-determining factor for this use of MAO-containing catalyst systems, which means that excesses of MAO are economically disadvantageous.

In recent years, catalysts have been described which utilize bis(cyclopentadienyl) or monocyclopentadienyl transition metal compounds, where non-coordinating anion cocatalysts are employed instead of aluminoxane. Useful such non-coordinating cocatalysts are disclosed in published European patent applications 0,277,003A and 0,277,004A.

Recently different types of dendrimers are described in literature, see for example in Chem. Unserer Zeit 2 (1996) 75. A category of dendrimers, known as carbosilane dendrimers, and their preparation are described in Organometallics, 13, (1994) 2682-2690. In published International patent application WO 97/32908, there is disclosed a method for polymerizing olefin monomers using Group IV metal-containing organosilicon dendrimer catalysts.

To the knowledge of the present inventers, a process by which EPM or EPDM elastomers of commercially acceptable properties may be produced, particularly under slurry polymerization conditions, using alumoxane-free catalyst systems based on cyclopentadienyl compounds has not been demonstrated. For an EPM or EPDM elastomer to be considered to have commercially acceptable properties, it should have a Mooney viscosity (ML1+4 at 125°C) no less than 10 and a glass transition temperature below -35°C. Other physical properties of the elastomer, such as the degree of crystallinity, may be important in certain intended applications of the elastomer.

For the production of EPDM, a random distribution of monomers is desired to prevent long sequences of ethylene which would result in high crystallinity. It is also desired to control the number of different types of active species of the catalyst since each catalyst complex will have a different relative reactivity of ethylene, propylene and ENB. It is desirable for the production method that the catalyst be sufficiently active that removal of the catalyst residue from the product is not needed. Hence a need exists for an improved catalyst system which is highly active and does not require the use of an undesirable excess of the cocatalyst.

### SUMMARY OF THE INVENTION

It is an object of the present invention to obviate or mitigate at least one of the above-disadvantages of the prior art.

It is a further object of the present invention to provide a novel olefin polymerization process.

It is a further object object of the present invention to provide a novel olefin polymerization catalyst.

Accordingly, in one of its aspects, the present invention provides a process for production of an olefin polymer comprising the step of polymerizing an olefin monomer in the presence of a catalyst system comprising:
(a) a transition metal compound of Formula (I)

   A_{c}MeR_{d} (I)

   wherein:
   - Me: denotes a transition metal of Groups 3 to 10 of the Periodic Table of the Elements (IUPAC nomenclature 1985);
   - A: is an anionic ligand which is optionally singly- or multiply-bridged;
   - R: is a C₆₋₁₀ aryl or C₁₋₁₀ alkyl which may be optionally singly- or multiply-substituted; and
   - c, d: each represent an integer in the range of from 0 to 6;
(b) an organometallic compound of Formula (II)

   Me*(Y)ₑ(Z)_{f} (II)

   wherein:
   - Me*: represents an element of Group 2 or 13 of the Periodic Table of the Elements (IUPAC nomenclature 1985);
   - Y: can optionally be singly- or multiply-substituted, and is selected from the group consisting of C₁₋₃₀ alkyl, C₅₋₂₀ cycloalkyl and C₇₋₄₀ aryl;
   - Z: is selected from the group consisting of C₁₋₁₀ alkoxy, C₆₋₄₀ aryloxy siloxy, halogen and hydrogen;
   - e: is an integer in the range of from 1 to 3;
   - f: is an integer in the range of from 0 to 2; and
   with the proviso that e + f is equal to 2 or 3 depending on the oxidation state of Me*; and
(c) a dendrimeric compound.

In another of its aspects, the present invention provides an olefin monomer polymerization catalyst system comprising:
(a) a transition metal compound of Formula (I)

   A_{c}MeR_{d} (I)

   wherein:
   - Me: denotes a transition metal of Groups 3-10 of the Periodic Table of the Elements (IUPAC nomenclature 1985);
   - A: is an anionic ligand which is optionally singly- or multiply-bridged;
   - R: is a C₆₋₁₀ aryl or C₁₋₁₀ alkyl which may be optionally singly- or multiply-susbtituted; and
   - c, d: each represent an integer in the range of from 0 to 6;
(b) an organometallic compound of Formula (II)

   Me*(Y)ₑ(Z)_{f} (II)

   wherein:
   - Me*: represents an element of Group 2 or 13 of the Periodic Table of the Elements (IUPAC nomenclature 1985);
   - Y: can optionally be singly- or multiply-substituted, and is selected from the group consisting of C₁₋₃₀ alkyl, C₅₋₂₀ cycloalkyl and C₇₋₄₀ aryl;
   - Z: is selected from the group consisting of C₁₋₁₀ alkoxy, C₆₋₄₀ aryloxy siloxy, halogen and hydrogen;
   - e: is an integer in the range of from 1 to 3;
   - f: is an integer in the range of from 0 to 2; and
   with the proviso that e + f is equal to 2 or 3 depending on the oxidation state of Me*; and
(c) a dendrimeric compound.

The present inventors have discovered that a polymerization catalyst system comprising the combination of components (a), (b) and (c) can be used to produce a polymer having desirable physical properties. Advantageous, such polymers can be produce while obviating or mitigating the need to use large amounts of alumoxane cocatalysts as contemplated in the prior art. The present process is particularly well suited for the production of EPM- and EPDM-type polymers in a slurry system.

### BRIEF DESCRIPTION OF THE DRAWINGS

Embodiments of the present invention will be described with reference to the attached drawings, in which:
Figures 1 and 2 illustrate examples of useful starting materials for the production of various dendrimeric compounds useful as component (c) of the present polymerization catalyst system; and
Figure 3 illustrates examples of production of various dendrimeric compounds useful as component (c) of the present polymerization catalyst system.

### DETAILED DESCRIPTION OF THE PREFERRED EMBODIMENTS

Thus, component (a) of the present olefin monomer polymerization catalyst system comprises a transition metal compound of Formula (I):

A_{c}MeR_{d} (I)

wherein:
- Me: denotes a transition metal of Groups 3 to 10 of the Periodic Table of the Elements (IUPAC nomenclature 1985);
- A: is an anionic ligand which is optionally singly- or multiply-bridged;
- R: is a C₆₋₁₀ aryl or C₁₋₁₀ alkyl which may be optionally singly- or multiply-substituted; and
- c, d: each represent an integer in the range of from 0 to 6.

Transition metal compounds of Formula (I) which are particularly suitable are those in which:
- Me: is a metal selected from the group consisting of: titanium, zirconium, hafnium, vanadium, niobium and tantalum.
- A: is selected from the group consisting of: a pyrazolate of formula N₂C₃R¹⁰₃; a pyrazolylborate of formula R¹¹B(N₂C₃R¹°₃)₃; an alcoholate or phenolate of formula OR¹¹; a siloxane of formula OSiR¹¹₃; a thiolate of formula SR²; an acetylacetonate of formula (R¹¹CO)₂CR¹¹; a diimine of formula (R¹²N-CR¹¹)₂; an amidinate of formula R¹¹(NR¹²₂)₂; a cyclooctatetraenyl, a cyclopentadienyl which is optionally singly- or multiply-substituted, an indenyl which is optionally singly- or multiply-substituted, and a fluorenyl which is optionally singly- or multiply-substituted, wherein substituents, if present, may be selected from the group consisting of a C₁-C₂₀ alkyl group, a C₁-C₁₀ alkoxy group, a C₆-C₂₀ aryl group, a C₆-C₁₀ aryloxy group, a C₇ to C₄₀ arylalkyl group, a C₇ to C₄₀ alkylaryl group, and a boranyl, silyl, amino or phosphinyl group which is optionally substituted by C₁ to C₁₀ hydrocarbon radicals;
- R: is selected from the group consisting of hydrogen, fluorine, chlorine, bromine, methyl, benzyl, neopentyl and phenyl;
- c: is 1 or 2; and
- d: is 2 or 3;
wherein R¹⁰, R¹¹ and R¹² in the above preferred embodiment for A may be the same or different and each is selected from the group comprising hydrogen and a C₁-C₁₀ alkyl group.

The more preferred transition metal compounds for Formula (I) are those in which:
- Me: is selected from the group consisting of titanium, zirconium and hafnium;
- A: is selected from the group consisting of bis(trimethylsilyl)amide, dimethylamide, diethylamide, diisopropylamide, 2,6-di-tert-butyl-4-methyl phenolate, cyclooctatetraenyl, cyclopentadienyl, methylcyclopentadienyl, benzylcyclopentadienyl, n-propylcyclopentadienyl, n-butylcyclopentadienyl, iso-butylcyclopentadienyl, t-butyl-cyclopentadienyl, cyclopentylcyclopentadienyl, octadecylcyclopentadienyl, 1,2-dimethylcyclopentadienyl, 1,3-dimethylcyclopentadienyl, 1,3-di-isopropylcyclopentadienyl, 1,3-di-t-butylcyclopentadienyl, 1-ethyl-2-methyl-cyclopentadienyl, 1-isopropyl-3-methylcyclopentadienyl, 1-(n-butyl)-3-methylcyclopentadienyl, 1-(t-butyl)-3-methylcyclopentadienyl, pentamethylcyclopentadienyl, 1,2,3,4-tetramethylcyclopentadienyl, 1,2,4-trimethylcyclopentadienyl, 1,2,4-triisopropylcyclopentadienyl, 1,2,4-tri(t-butyl)cyclopentadienyl, indenyl, tetrahydroindenyl, 2-methylindenyl, 4,7-dimethylindenyl, 2-methyl-4,5-benzoindenyl, 2-methyl-4-phenylindenyl, fluorinenyl and 9-methyl-fluorenyl;
- R: is selected from the group consisting of chlorine, methyl and benzyl;
- c: is 1 or 2 ;and
- d: is 2 or 3.

Optionally, in these more preferred compounds of Formula (I), the anionic ligand, A, can be bridged by a divalent group, such as a divalent group selected from the group consisting of: Me₂Si, Ph₂Si, Ph(Me)Si, Me₂C, Ph₂C, Ph(Me)C or CH₂CH₂.

Non-limiting examples of useful transition metal compounds wherein c=2 are described in the following published European patent applications which are for U.S. prosecution purposes included by reference:
EP 0,129,368A EP 0,351,392A EP 0,485,821A
EP 0,485,823A, EP 0,549,990A EP 0,659,758A.

Further, non-limiting examples of useful transition metal compounds wherein c=1 are described in Macromol. Chem. Rapid Commun. (13) 1992, 265. Still further, non-limiting examples of useful transition metal compounds which comprise bridged monocyclopentadienyl complexes are described in published European patent application 0,416,815A, published International patent application WO91/04257 and published International patent application WO 96/13529, which are for U.S. prosecution purposes included by reference.

In another preferred embodiment, suitable transition metal compounds of Formula (I) include those in which:
- Me: represents nickel and palladium;
- A: is a diimine of formula 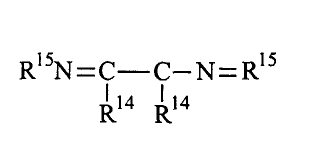
- c: represents 1 and d represents 2;
and R¹², R¹⁴, R¹⁵ have the aforementioned meaning.

Examples of said diimine complexes are described in WO 96/23010 which is for U.S. patent practice included by reference and in other literature references.

Component (b) of the present olelifin monomer polymerization catalyst system preferably comprises organometallic compounds of Formula (II) in which Me* is aluminum. Non-limiting examples of suitable such compounds may be selected from the group consisting of trimethylaluminum, triethylaluminum, triisopropylaluminum, tri(n-propyl)aluminum, triisobutylaluminum, tri(n-butyl)aluminum, tri(n-hexyl)aluminum, triisoctylaluminum, tri(n-octyl)aluminum, dimethylaluminum chloride, diethylaluminum chloride, diisopropylaluminum chloride, di(n-propyl)aluminum chloride, diisobutylaluminum chloride, di(n-butyl)aluminum chloride, dimethylaluminum ethoxide, diethylaluminum ethoxide, diisopropylaluminum ethoxide, di(n-propyl)aluminum ethoxide, diisobutylaluminum ethoxide, di(n-butyl)aluminum ethoxide, dimethylaluminum hydride, diethylaluminum hydride, diisopropylaluminum hydride, di(n-propyl)aluminum hydride, diisobutylaluminum hydride, di(n-butyl)aluminum hydride and mixtures thereof.

Component (c) of the present olefin monomer polymerization catalyst system comprises a dendrimeric compound. Preferably, the dendrimeric compound is a carbosilane dendrimeric compound. More preferably, the dendrimeric compound is a compound of Formula (III):

R¹₄₋ᵢMe¹[(R⁴)ₙX]ᵢ (III),

wherein:
- X: is Me²R²R³(R^{y})ᵣ;
- R¹, R², R³, R^{y}: are identical or different, can optionally be singly- or multiply-substituted, and are selected from the group comprising hydrogen, C₅-C₂₀ cycloalkyl, C₁-C₃₀ alkyl, C₇-C₄₀ aryl, C₁-C₁₀ alkoxy, C₆-C₄₀ aryloxy, siloxy and halogen;
- R⁴: is optionally a singly- or multiply- C₁-C₁₀ alkyl substituted or C₁-C₁₀ alkoxyl substituted alkylene-, alkenylene- or alkynylene diradical, optionally substituted in chain by oxygen or sulfur atoms;
- Me¹: represents an element of Group 14 of the Periodic Table of the elements (IUPAC nomenclature 1985);
- Me²: represents an element of Group 13 of the Periodic Table of the elements (IUPAC nomenclature 1985);
- i: is an integer in the range of from 2 to 4;
- n: is an integer in the range of from 1 to 20; and
- r: can be 0 or 1;
with the proviso that, when r = 1, the Me² radical carries a negative formal charge and if there is a negative formal charge on Me² this is compensated for by a cation;
or wherein:
- X: is M¹R⁵ₐ[(R⁴)ₘMe²R²R³(R^{y})ᵣ]₃₋ₐ;
each of Me¹, Me², R¹, R², R³, R⁴, R^{y}, i, n and r have the meaning above;
- R⁵: has the same meaning as any one of R¹, R², R³ and R^{y};
- m: is identical to or different from n and represents an integer in the range of from 1 to 20; and
- a: is 0, 1 or 2;
or wherein
- X: is Me¹R⁵ₐ[(R⁴)ₘMe¹R⁶_{b}[(R⁴)ₚMe²R²R³(R^{y})ᵣ]_{3-b}]₃₋ₐ,
each of Me¹, Me², R¹, R², R³, R⁴, R^{y}, i, n, r, m and a have the meaning above;
- R⁶: has the same meaning as any one of R¹, R², R³, R^{y} and R⁵;
- b: is 0, 1 or 2; and
- p: is an integer in the range of from 1 to 20.

Suitable cations in the event that Me²-radical carries a negative formal change may be ions of atoms or molecules, such as alkali metal ions, e.g., Li, Na or K, alkaline earth metal ions such as Be²⁺, Mg²⁺, Ca²⁺, Ba²⁺, transition metal ions such as Zn²⁺, Cd²⁺, Mg²⁺, Cu²⁺, Ca²⁺, or organic compounds such as ammonium or phosphonium ions of the NR₄⁺ or PR₄⁺ type, preferably Ph-N(CH₃)₂H^{+,} or carbocations of the CR₃⁺ type, preferably Cph₃⁺.

The nature of the cation NR₄⁺ influences, *inter alia*, in particular the solubility of the salts formed from the specified dendritic compounds having the Formula (III) and at least one negative charge (r = 1) and sufficient cations to neutralize the net charge. The solubility of these salts in non-polar solvents, such as toluene or xylene, can be improved by, for instance, employing an ammonium cation NR¹R₃⁺ in which the substituent group R' is a branched or unbranched long-chain hydrocarbon residue. R' is preferably an unbranched alkyl group with 6-40 carbon atoms, special preference being for 8-12 carbon atoms. The remaining groups NR'R₃⁺ , the ligand R, can be, independently of one another, hydrogen, C₁₋₅ alkyl groups; the alkyl or aryl groups may be singly or multiply substituted. Preferably at least one ligand R in NR'R₃⁺ is a hydrogen atom. Preferred cations include, for instance, dimethylundecylammonium and dodecyldimethylammonium.

As stated above, the dendrimeric compound of Formula (III) may comprise one or more cycloalkyl radicals. Non-limiting examples of such radicals may be selected from the group consisting of cyclopentyl, cyclohexyl, cycloheptyl and cyclooctyl radicals, condensed cycloaliphatic radicals such as decalin or hydrindene radicals, and bicylcic radicals such as norbornyl radicals. Cyclopentayl, cyclohexyl and norbornyl radicals preferred.

The preferred alkyl radicals for the dendrimeric compound of Formula (III) are those which comprise 1 to 10 carbon atoms, for example: methyl, ethyl, propyl, n-butyl, pentyl, hexyl, heptyl, octyl, iso-propyl, sec-butyl, tert-butyl or neopentyl; most preferably methyl ethyl, propyl, n-butyl, sec-butyl or tert-butyl.

Suitable aralkyl radicals are those comprising in the range of from 7 to 20 carbon atoms, preferably the benzyl radical.

The preferred aryl radicals are those comprising in the range of from 6 to 20 carbon atoms, preferably the benzyl radical.

The preferred aryl radicals are those comprising in the range of from 6 to 20 carbon atoms, for example: phenyl, toluyl, p-halogenophenyl, mesityl, pentafluorophenyl, bis-(3,5-tri-fluoro-methyl)-phenyl, particularly pentafluorophenyl or bis-(3,5-tri-fluoromethyl)-phenyl, most preferably pentafluorophenyl.

The preferred aryloxy radicals are those comprising in the range of from 6 to 10 carbon atoms, e.g., phenyloxy radicals.

Suitable silyloxy radicals may be entities of the -O-SiR₃ type, wherein R represents C₁₋₁₀ alkyl radicals or C₆₋₁₀ aryl radicals. Silyloxy radicals such as -O-SiMe₃, -O-SiEt₃ and -O-SiPh₃ are preferred.

Examples of halogens which may be present in the dendrimeric compound of Formula (III) may be selected from the group consisting of fluorine, chlorine and bromine, particularly fluorine and chlorine.

As mentioned above, depending on the number of carbon atoms the R¹, R², R³, R⁴ and R^{y} radicals of Formula (III) may be singly- or multiply-substituted, and preferably comprise a single to ten-fold degree of substitution, most preferably a single to five-fold degree of substitution. Examples of suitable substituents include the aforementioned cycloalkyl, alkyl, aralkyl, aryl, alkoxy, aryloxy, aryloxy and silyoxy radicals, as well as the aforementioned halogens. The preferred substituents are halogens, particularly fluorine, alkyls such as methyl and ethyl, perhalogenated alkyls such as CF₃, or perhalogenated aromatics such as C₆F₅.

Suitable elements of the group 14 of the Periodic Table of the Elements which may be present in the dendrimeric compound of Formula (III) can be selected from the group consisting of Si, Ge, Sn, Pb, preferably Si, Ge, Sn, more preferably Si.

Suitable elements of the group 13 of the Periodic Table of the Elements which may be present in the dendrimeric compound of Formula (III) can be selected from the group comprising B, Al, In and Ga, preferably B, Al, most preferably B.

The integer i the compound of Formula (III) preferably is 3 or 4, most preferably 4. The integer n in the compound of Formula (III) is preferably in the range of 1 to 10, more preferably in the range of 2 to 5. Preferably, the integer r in the compound of Formula (III) is 0.

Moreover, the integer m in the compound of Formula (III) is preferably in the range of 1 to 10, more preferably in the range of 2 to 5. It is also preferred that the integers a and b in the compound of Formula (III) are both 0, and that the integer p is in the range of 1 to 10, more preferably 2 to 5.

The preferred dendrimeric compounds are those of general Formula (IV)

R'₄₋ᵢSi[(R⁴)ₙX]ᵢ (IV)

wherein:
- X: represents Me²R²R³(R^{y})ᵣ, and R¹, R², R³, R^{y} are identical or different, preferably identical, can optionally be singly- or multiply-substituted, and represent C₅-C₆ cycloalkyl, C₆-C₁₀ aryl, C₁-C₁₀ alkyl and/or halogen;
- R⁴: is a methylene radical;
- Me²: is B or Al;
- i: is an integer in the range of 2 to 4;
- n: is an integer in the range of 1 to 20; and
- r: is 0 or 1;
or wherein:
- X: represents SiR⁵ₐ[(R⁴)ₘ,Me² R² R³ (R^{y})ᵣ]_{3-a;}
- R⁵: has the same meaning as the R¹, R², R³ and R^{y} radicals above;
- m: is identical to or different from n and each is an integer in the range 1 to 20;
- a: is 0, 1 or 2;
and Me², R², R³, R⁴, i, n and r have the aforementioned meanings;
or wherein:
- X: represents SiR⁵ₐ[(R⁴)ₘSiR⁶_{b}[(R⁴)ₙMe² R² R³(R^{y})ᵣ]_{3-b}]₃₋ₐ
Me², R², R³, R⁴, R⁵, R^{y}, i, n, r, m and a have the aforementioned meanings;
- R⁶: has the same meaning as the aforementioned R², R³, R⁴, R⁵, R^{y} radicals;
- b: is 0, 1 or 2; and
- p: is an integer in the range 1 to 20.

Dendrimeric compounds which are quite particularly preferred are those of general Formula (V)

R¹₄₋ᵢ[(CH₂)ₙX]ᵢ (V)

wherein:
- X: represents BR²R³(R^{y})ᵣ;
- R¹, R², R³, R^{y}: are identical or different, preferably identical, can optionally be singly-or multiply-substituted, and each is selected from a C₆-C₁₀ aryl or a C₁-C₁₀ alkyl;
- i: is 3 or 4,
- n: is an integer in the range 1 to 20; and
- r: is 0 or 1;
or wherein:
- X: represents SiR⁵ₐ[(CH₂)ₘSiR⁶_{b}[(CH₂)ₚBR²R³(R^{y})ᵣ]_{3-b}]₃₋ₐ;
R², R³, R⁵, R^{y}, i, n, m and r have the aforementioned meanings;
- R⁶: has the same meaning as the aforementioned R¹, R², R³ and R^{y} radicals;
- b: is 0, 1 or 2; and
- p: is an integer in the range 1 to 20.

Non-limiting dendrimeric compounds useful in the present process and catalyst system maybe selected from the following list:
Si[(CH₂)₃BCl₂]₄
Si[(CH₂)₃BMe₂]₄
Si[(CH₂)₃B(C₆F₅)₂]₄
Si[(CH₂)₃BMes₂]₄
Si[(CH₂)₃B(C₆H₃(CF₃)₂)₂]₄
Si[(CH₂)₃BMe₃]₄⁴⁻4K⁴⁺
Si[(CH₂)₃B(n-Bu)₃]₄⁴⁻4K⁴⁺
Si[(CH₂)₃B(n-Bu)₂]₄
Si[(CH₂)₃B(C₆F₅)₂]₄⁴⁻4K⁴⁺
Si[(CH₂)₃B(C₆H₃(CF₃)₂)₃]₄⁴⁻4K⁴⁺
Si{(CH₂)₂Si[(CH₂)₃BCl₂]₃}₄
Si{(CH₂)₂Si[(CH₂)₃BMe₂]₃}₄
Si{(CH₂)₂Si[(CH₂)₃B(n-Bu)₂]₃}₄
Si{(CH₂)₂Si[(CH₂)₃B(C₆F₅)₂]₃}₄
Si{(CH₂)₂Si[(CH₂)₃BMe₂]₃}₄¹²⁻12K⁺
Si{(CH₂)₂Si[(CH₂)₃B(n-Bu)₃]₃}₄¹²⁻12K⁺
Si{(CH₂)₂Si[(CH₂)₃B(C₆F₅)₃ ]₃}₄¹²⁻12K⁺
Si{(CH₂)₂ Si[(CH₂)₃B(3,5-(CF₃)₂C₆H₃)₃]₃}₄¹²⁻12K⁺
Si[O-[CH₂]₃-Si(CH₃)([CH₂]₃-BCl₂)₂]₄
Si[O-[CH₂]₃-Si(CH₃)([CH₂]₃-BMe₂)₂]₄
Si[O-[CH₂]₃-Si(CH₃)([CH₂]₃-BBu₂)₂]₄
Si[O-[CH₂]₃-Si(CH₃)([CH₂]₃-BPh₂)₂]₄
Si[O-[CH₂]₃-Si(CH₃)([CH₂]₃-B(C₆F₅)₂]₂}₄
8Cat⁺ [Si{O-[CH₂]₃-Si(CH₃)([CH₂]₃-BMe₃)₂}₄]⁸⁻
8Cat⁺ [Si{O-[CH₂]₃-Si(CH₃)([CH₂]₃-BPh₃)₂}₄]⁸⁻
8Cat⁺ [Si{O-[CH₂]₃-Si(CH₃)([CH₂]₃-B(C₆F₅)₃]₃}₄]⁸⁻
wherein Mes=2,4,6-mesityl and K=a singly-or multiply-charged cation.

The cation represented by Cat⁺ is preferably (i) the cation of an alkali metal (e.g., lithium, sodium or potassium); (ii) a carbocation (e.g., triphenylmethylium); or (iii) a doubly or trebly substituted ammonium ion (e.g., *N,N*-dimethylanilinium, trimethylammonium, triethylammonium, tributylammonium, dimethylundecylammonium, dodecyldimethylammonium, demtheylcatadecylammonium, methyldioctadecylammonium, methyloctadecylammonium or dioctadecylammonium).

The dendrimeric compounds of general Formula (III) may produced by a method such as that described in copending German patent application 198 12 881.9 (filed March 24, 1998) which is for U.S. patent practice included by reference. Specifically, the method is characterised in that compounds of general Formula (VI)

R¹₄₋ᵢMe¹[(R⁷)ₙ₋₂Y]ᵢ (VI)

wherein:
- Y: represents CR⁸=CR⁹R¹⁰;
- R⁸, R⁹ and R¹⁰: are identical or different and each is selected from the group comprising hydrogen, alkyl, aryl or halogen;
- R⁷: has the same meaning as the R⁴ radicals in the compound of Formula (III) above;
- n: is an integer in the range of 2 to 20; and
R¹, Me¹ and i have the definition given for the compound of Formula (III) above;
or wherein:
- Y: represents Me¹R⁵ₐ[(R⁷)ₘ₋₂(CR⁸=CR⁹R¹⁰)]₃₋ₐ and
- R⁵: has the definition given in the compound of Formula (III) above;
or wherein:
- Y: represents Me¹R⁵ₐ[(R⁴)ₘMe¹R⁶_{b}[(R⁷)ₚ₋₂(CR⁸=CR⁹R¹⁰)_{3-b}]₃₋ₐ;
- R⁴: has the definition given in the compound of Formula (III);
each of m and p is an integer in the range of 2 to 20;
and wherein all the other radicals cited in the formulae for Y have the aforementioned meanings;
are reacted with compounds of general Formula (VII)

R¹¹Me²R²R³ (VII)

wherein:
- R¹¹: is hydrogen or a C₁-C₃₀ alkyl; and
Me², R² and R³ have the meanings the compound of Formula (III) above;
and if r = 1, the product obtained therefrom is reacted further with compounds of general Formula (VIII)

Me³-R^{y} (VIII)

wherein:
- Me³: is an alkali metal and R^{y} has the meaning given in the compound of Formula (III) above;
or are reacted with compounds of general Formula (IX)

Hal_{q}-Me⁴-R^{y}_{2-q} (IX)

wherein:
- Me⁴: is an alkaline earth metal or a transition metal of group 11 or 12;
- Hal: is a halogen;
- q: is 0 or 1; and
- R^{y}: has the meaning set forth above.

The alkaline earth metal is preferably Mg, the transition metals are preferably selected from the group comprising Zn, Cd, Hg and Cu, and the alkyl metals are preferably selected from the group comprising Li, Na and K, most preferably Li.

The preferred R⁸, R⁹ and R¹⁰ radicals selected from hydrogen and C₁-C₅ alkyl. More preferably, each of R⁸, R⁹ and R¹⁰ are hydrogen.

The influence of the Me¹ metal atom in unsaturated compounds of Formula (VI) wherein n, m or p = 2 often results, during the addition of compounds of Formula (VII), in the formation of branched compounds comprising the following structural element: 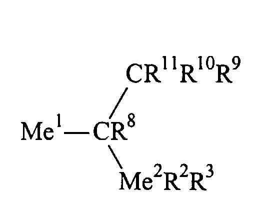 whereby compounds of Formula (III) in which n, m or p = 1 can be obtained.

The compounds which are preferably used as compounds of Formulae (VI), (VII), (VIII) and (IX) are preferably those of general Formulae (VI), (VII), (VIII) and (IX), respectively, as given below:

R¹₄₋ᵢSi[(CH₂)ₙY]ᵢ (VIa)

wherein:
- Y: is -CH-CH₃;
- i: is 3 or 4;
- R¹: is a C₁-C₆ alkyl or C₆-C₁₂ aryl radical which is optionally singly- or multiply-substituted; and
- n: is an integer in the range of 1 to 10;
or wherein:
- Y: is SiR⁵ₐ[(CH₂)ₘCH=CH₂]₃₋ₐ;
- a: is 0, 1 or 2;
- R⁵: has the same meaning as R¹; and
- m: is an integer in the range of 1 to 10;
or wherein:
- Y: is SiR⁵ₐ[(CH₂)ₘSiR⁶_{b}[(CH₂)ₚCH=CH₂]_{3-b}]₃₋ₐ;
each of R³ and R⁶ have the same meaning as R¹; and
each of p and m is an integer in the range of 1 to 10;

H-BR²R³ (VIIa)

wherein:
R², R³ have the meaning given in for the compound of Formula (III) above;

Me³-R^{y} (VIIIa)

wherein:
- Me³: is Li or Na; and
- R^{y}: has the meaning given in the compound of Formula (III) above;

Hal_{q}-Mg-R^{y}_{2-q} (IXa)

wherein:
- Hal: is Cl or Br; and
- R^{y}: has the meaning given in the compound of Formula (III) above; and
- q: is 0 or 1.

The compounds of Formula (VI) which are most preferably used are those of general Formula (VIb):

Si[(CH₂)ₙY]₄ (VIb)

wherein:
- Y: is -CH=CH₂ and
- n: is 1, 2, 3 or 4;
or wherein:
- Y: is Si[(CH₂)ₘCH=CH₂]₃; and
- m: is 1, 2, 3 or 4;
or wherein:
- Y: is Si[(CH₂)ₘSi[(CH₂)ₚCH=CH₂]₃]₃
- p: is 1, 2, 3 or 4; and
- m: has the above meaning.

As mentioned above, in the method, compounds of general Formula (VI) are reacted with compounds of general formula (VII), and non-ionic dendrimeric compounds of general Formula (III), wherein r=0, are obtained.

The reaction of compounds of general Formula (VI) with compounds of general Formula (VII) preferably is conducted at temperatures in the range of from -100° to 150°C, preferably in the range of from -80° to 100°C, and at a pressure of from normal pressure to 10 bar, preferably at normal pressure. During the reaction, the molar ratio of compounds of general Formula (VI) to compounds of general Formula (VII) is generally such that at least one equivalent of the compound of Formula (VII) is available for each CR⁸=CR⁹C¹⁰ radical of Formula (VI).

The reaction is optionally conducted in the presence of solvents and/or diluents, such as alkanes for example. In many cases, however, this use of solvents and/or diluents can be omitted. This is the situation, for example, when an unsaturated compound of Formula (VI) is reacted with HBCl₂. The HBCl₂ which is used during the reaction can be produced as an intermediate from any one of trialkylsilanes, R₃Si-H and BCl₃. This method of preparation is described in J. Org. Chem. 1990, 55, 2274, for example.

For the production of dendrimeric compounds of general Formula (III) (where r=1) which are synthesised ionically, the reaction product obtained from reaction of the compounds of general Formula (VI) and the compounds of general Formula (VII) is reacted further with organic alkali metal, alkaline earth metal or transition metal compounds of Formulae (VIII) or (IX). This reaction preferably is conducted at a temperature in the range of from -100° to 200°C, preferably at in the range of from - 100° to 150°C, and at normal pressure. The aforementioned solvents and/or diluents, in the amounts which were also mentioned above, are suitable as solvents and/or diluents here.

The compounds of Formulae (VI) or (VII) are preferably used in an equimolar ratio or in excess with respect to the Me²R²R³ radical of the dendrimeric compound of Formula (III) wherein r = 0 which are obtained by the reaction of compounds of Formula (VI) with compounds of Formula (VII).

The preparation of the compounds of Formula (VII) which are employed as starting materials is known, and can be effected analogously to the preparation of carbosilane dendrimers. Conditions for the preparation of carbosilane dendrimers. Conditions for the preparation of carbosilane dendrimers are given, for example, in Rubber Chem. Technol. 1992, 65, 303-314; Adv. Mater. 1993, 5, 466-468; Macromolecules 1992, 26, 963-968; J. Chem. Soc., Chem. Commun. 1994, 2575-2576; Organometallics 1994, 13, 2682-2690; Macromolecules 1995, 28, 6657-6661; and Organometallics 1995, 14, 5362-5366.

In the course of this preparative procedure, an alkenylsilane such as tetravinyl- or tetraallysilane may be reacted with a hydrochlorosilane such as USiCl₃, MSiMeCl₂ or MSiMe₂Cl, and the product obtained is reacted further with an alkenylmagnesium compound (i.e., a Grignard reaction). This reaction sequence (a hydrosilylation with a Grignard reaction) can then be repeated several times.

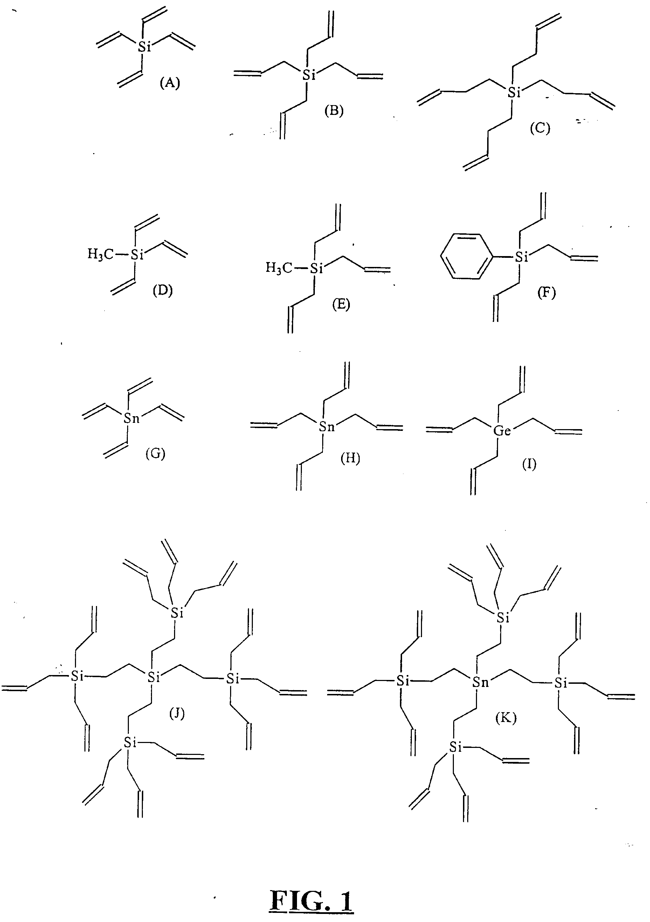

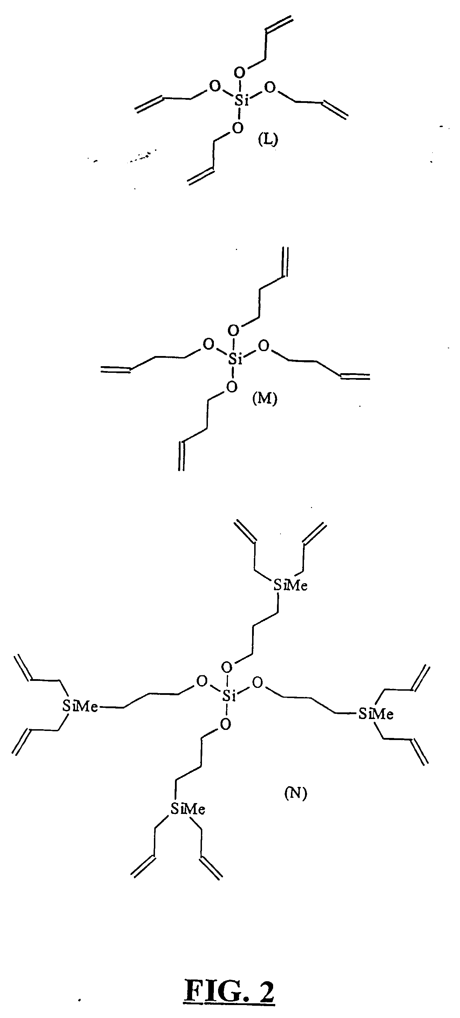

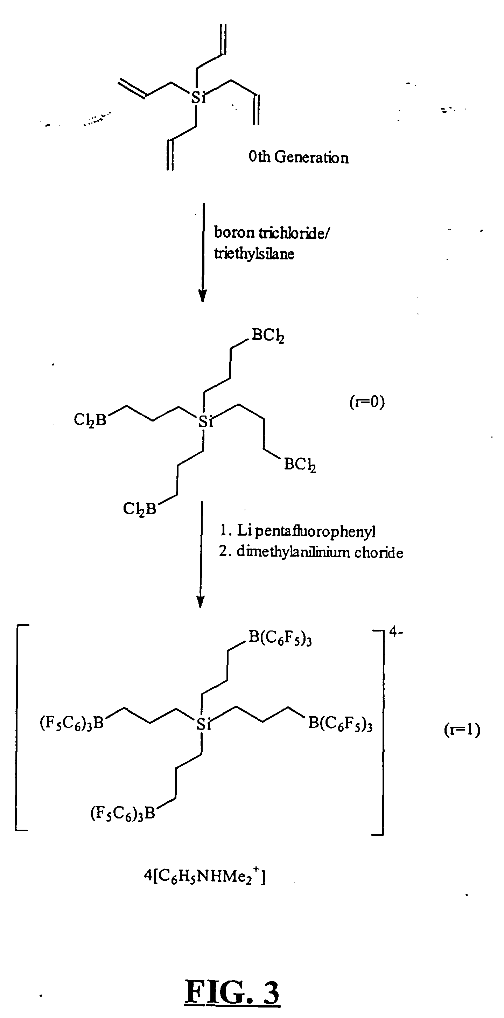

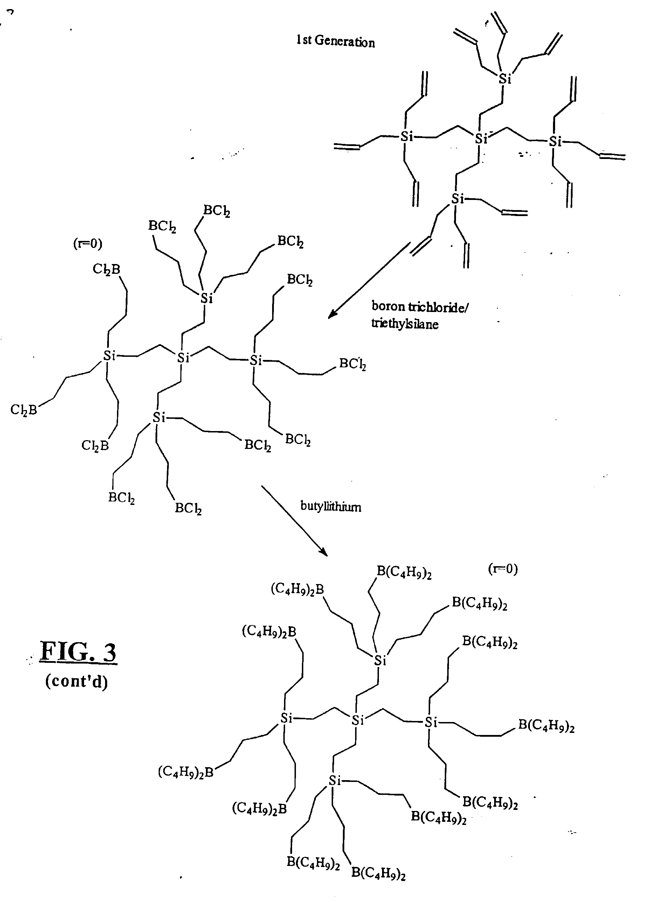

The compounds of Formula (VI) which are preferred as starting materials are illustrated in Figures 1 and 2. The preparation of compounds of Formula (III) is exemplified by the sequence of reactions illustrated in Figure 3

The present catalyst system may be used to produce an olefin polymer. As used through this specification, the term α-olefin polymer is intended to have a broad meaning an encompasses homopolymers, copolymers, terpolymers, etc. which are derived from the polymerization of at least one olefin monomer. As used throughout this specification, the term α-olefin polymer is intended to have a broad meaning and encompasses α-olefin monomers, diolefin monomers and monomers containing at least one internal olefin linkage.

In one preferred embodiment, the olefin monomer is ethylene.

In another preferred embodiment, the olefin monomer is an α-olefin monomer, α-Olefin monomers are well known in the art and the choice thereof for use in the present process is within the purview of a person skilled in the art. Preferably, the α-olefin monomer is selected from the group consisting of propylene, butene-1, isobutene, pentene-1, hexene-1, octene-1, branched isomers thereof, styrene, α-methylstyrene and mixtures thereof. The most preferred α-olefin monomer is propylene.

In yet another preferred embodiment, the olefin monomer comprises a nonconjugated diolefin monomer. Diolefin monomers are well known in the art and the choice thereof for use in the present process is within the purview of a person skilled in the art. The nonconjugated diolefin can be straight chain, branched chain or cyclic hydrocarbon dioolefins having from 6 to 15 carbon atoms. Illustrative nonlimiting examples are straight chain acyclic diolefins such as 1,4-hexadiene and 1,6-octadiene, the branched chain acyclic diolefins such as 5-methylhexadiene-1,4, 7-methyl-octadiene-1,6 and 7-methyl-octadiene-1,7; single ring alicyclic diolefins such as 1,4-cyclohexadiene and 1,5-cyclooctadiene, and multi ring alicyclic fused and bridged ring dioolefins such as tetrahydroindene, dicyclopentadiene, 5-ethylidene-2-norbornene, 5-vinylidene-2-norbornene and 5-isopropylidene-2-norbornene. 1,4-Hexadiene, 7-methyl-1,6-octadiene, dicyclopentadiene and 5-ethylidene-2-norbornene are the preferred nonconjugated diolefins and 5-ethylidene-2-norbornene is the most preferred nonconjugated diolefin.

Of course it is possible, and preferred, to utilize mixtures of the various types of olefin monomers described hereinabove.

In one preferred embodiment, the olefin monomer is a mixture of ethylene and at least one α-olefin (as described hereinabove) which results in the production of a copolymer. The preferred such monomer mixture comprises ethylene and propylene. In this embodiment, it is preferred to utilize a mixture which results in an elastomer containing in the range of from 30 to 75, more preferably in the range of from 35 to 65, weight percent ethylene and in the range of from 25 to 70, more preferably in the range of from 35 to 65, weight percent α-olefin.

In another preferred embodiment, the olefin is a mixture of ethylene, at least one α-olefin (as described hereinabove) and at least one diolefin monomer (as described hereinabove) which results in the production of a terpolymer. The preferred such monomer mixture comprises ethylene, propylene and one or both of 5-ethylidene-2-norbornene and 5-vinylidene-2-norbornene. In this embodiment, it is preferred to incorporate into the preferred mixture of ethylene and α-olefin the diolefin monomer in an amount such that the elastomer product contains in the range of from 0.5 to 15, more preferably in the range of from 1 to 10, weight percent of the diolefin monomer.

Polymerization of the olefin monomer(s) using the present catalyst system may be carried out in a polymerization medium containing an inert hydrocarbon which is a solvent at least for the olefin monomer and the catalyst system. When the polymerization process is slurry polymerization, one of the reactants (e.g., the α-olefin, if used) may be used as the polymerization diluent or a hydrocarbon in which the product polymer is insoluble may be used as the diluent. Polymerization of the olefin monomer(s) may be carried out batchwise or in a continuous manner. The preferred process involves continuous slurry polymerization in which ethylene, α-olefin monomer, diolefin monomer (if used) and the catalyst system are continuously supplied to a reaction zone and the product polymer is formed as a slurry in the liquid phase. Suitable inert hydrocarbons for use as the polymerization medium are those comprising at least one element comprising selected from the group consisting of C₄-C₈ aliphatic hydrocarbons, C₅-C₁₀ cyclic aliphatic hydrocarbons, C₆-C₉ aromatic hydrocarbons, C₃-C₈ monoolefinic hydrocarbons and mixtures thereof. Non-limiting examples of such hydrocarbons include: (i) straight and branched chain hydrocarbons such as butane, isobutane, pentane, hexane, octane and the like; (ii) cyclic and alicyclic hydrocarbons such as cyclopentane, cyclohexane, cycloheptane, ethylcyclopentane, methylcyclohexane, methylcycloheptane and the like; (iii) alkyl-substituted aromatic hydrocarbons such as toluene, xylene and the like; and (iv) liquid olefins which may act as monomers or comonomers such as propylene, butene-1 and the like.

The present process is generally carried out at temperatures in the range of from -40°C to 200°C, preferably from -20° to 100°C, more preferably from 0°C to 80°C, and at a pressure in the range of from 30 kPa to 50 MPa.

Preferably, the molar ratio between the organometallic compound of the Formula (II) and the transition metal compound of the Formula (I) is in the range of from 1:1 to 10000 : 1, more preferably in the range of from 1:1 to 1000 : 1, most preferably in the range of from 1:1 to 200 : 1.

Preferably, the molar ratio between the dendrimeric compound and the transition metal compound of the Formula (I) is in the range of from 0.01:1 to 10 : 1, more preferably in the range of from 0.02 : 1 to 1 : 1, most preferably in the range of from 0.1:1 to 1 : 1.

The precise mode of carrying out the present process is not particularly restricted. In one preferred embodiment, the present process may be carried out by first introducing the hydrocarbon diluent into a stirred tank reactor together with the olefin monomer(s) and adjusting the pressure of the reactor contents so that the temperature of the reactor contents are brought to the desired level. Ethylene gas may be introduced either into the vapour phase of the reactor or sparged into the liquid phase as is known in the art. Thereafter, a hydrocarbon solution of the vanadium compound containing a desired amount of the activator and a hydrocarbon solution of the aluminum cocatalyst(s) in the desired ratios are introduced in the liquid phase. The polymerization occurs substantially in the liquid phase, a slurry of the product polymer being formed in the diluent. The rate of polymerization may be controlled by the rate of catalyst addition. The reactor temperature and pressure may be controlled through the vaporization of the liquid phase as well as by cooling coils, jackets, etc. If a mixture of olefin monomers is used, the content of any one monomer in the polymer product may be controlled by manipulating the feed rates of the respective olefin monomers to the reactor and by manipulating the concentration of catalyst fed to the reactor. The polymer product may be recovered in a conventional manner by flashing off the lower boiling compounds either at reduced pressure or by treatment of the slurry with a mixture of steam and hot water, and by the use of a devolatilizing extruder or by further steam stripping and subsequent dewatering and drying. In a preferred continuous process, the mean residence time of the catalyst and polymer in the reactor is generally in the range of from 20 minutes to 8 hours, preferably from 30 minutes to 6 hours, more preferably from 30 minutes to 4 hours, most preferably from 30 minutes to 2 hours.

Alternatively, the polymerization may be carried out using solution polymerization techniques. See, for example, any one of published European patent application 0,044,595A [Evens et al.], published European patent application 0,552,945 [Kawasaki et al.] and published International patent application WO 96/33227 [Schiffino et al.], which are for U.S. patent practice included by reference.

Alternatively, the polymerization may be carried out using conventional gas phase polymerization techniques. See, for example, any one of United States patent 4,994,534 [Rhee et al.], published International application WO 99/19059 [Haendeler et al.] and published Internation application WO 99/19385 [Herold et al.] which are for U.S. patent practice included by reference.

Embodiments of the present invention will be illustrated with reference to the following Examples which should not be used to limited the scope of or construe the invention.

In the Examples, organometallic compounds were prepared and handled under a protective argon atmosphere, and with the exclusion of air and moisture (known in the art as the "Schlenk technique"). All the necessary solvents were obtained as absolute solvents before use by boiling for several hours over a suitable drying agent and subsequent distillation under argon. The compounds were characterized by ¹H NMR, ¹³C NMR and ¹¹B NMR. Other, commercially available starting materials were used without further purification. Tetraallysilane was prepared from silicon tetrachloride and allylmagnesium chloride.

### EXAMPLE 1: Preparation of Si[(CH₂)3BCl₂]

23.5 g (0.2 moles) boron trichloride were condensed at -65°C into a flask fitted with a gas inlet, reflux condenser and internal thermometer. A mixture of 23.3 g (0.2 moles) triethylsilane and 9.6 g (0.05 moles) tetraallylsilane was then slowly added drop-wise at this temperature. After the addition was complete, the batch was heated to room temperature. Thereafter, the volatile constituents (essentially triethylchlorosilane) were removed under a vacuum of 0.2 bar, first at room temperature and then at a bath temperature of 40°C. The product was obtained as a colourless, very mobile oil. The properties of the product were as follows:
C₁₃H₂₄Cl₈Si, M=523.271 g/mole;
   - ¹H NMR (CDCl₃):: δ=0.52 ppm (m, 2H, Si-CH₂), 1.55 PPM (m, 4H, Cl₂B-CH₂-CH₂);
   - ¹³C{¹H} NMR:: δ=15.4ppm (Si-CH₂), 20.0 ppm (Si-CH₂-CH₂); 34.2 ppm (B-CH₂); and
¹¹B{¹H} NMR:δ=63.1 ppm.

### EXAMPLE 2: Preparation of a Solution of Si[(CH₂)₃B(C₆F₅)₃]₄⁴⁺ 4 Li⁺

6.35 mL n-butyl lithium (1.6 M in hexane; 10.1 mmoles) were added drop-wise to a solution of 2.5 g (10.1 mmoles) bromopentafluorobenzene in 60 ml hexane at -70°C over 20 minutes. The suspension obtained was stirred for 2 hours at -70°C. A solution of 445 mg (0.85 mmoles) Si[(CH₂)₃BCl₂]₄ from Example 1 in 5 mL hexane was then added drop-wise over 5 minutes, and the reaction solution was then slowly heated to room temperature over 3 hours, and was stirred overnight.

### EXAMPLE 3: Preparation of Si [(CH₂)₃B(C₆F₅)₃]₄⁻4C₆H₅-NH(CH₃)₂^{±}

536 mg (3.4 mmoles) dimethylanilinium hydrochloride in 20 mL methylene chloride were added to a solution of Si[(CH₂)₃B(C₆F₅)₃]₄⁴⁺ 4 Li⁺, prepared as in Example 2. The batch was again stirred overnight and finally the volatile constituents were distilled off under vacuum. After adding 40 mL methylene chloride, the product was filtered through kieselguhr and the colourless filtrate was freed from volatile constituents under vacuum. After washing twice with 20 mL hexane, each time the product was obtained as a colourless wax. The properties of the product were as follows:
C₁₁₆H₇₂B₄F₆₀N₄Si, M=2722.170 g/mole; and
¹¹B{¹H} NMR(CD₂Cl₂): δ=-13.4 PPM.

### EXAMPLES 4-9

In these Examples, the weight percent ethylene in the EPM and EPDM polymers was determined by FTIR spectroscopy in accordance with ASTM D-3900-95. Thus, polymeric films were pressed at 150°C and the spectra recorded. The ethylene content was determined by integrating the absorbance peaks at 720 cm⁻¹ and 1155 cm^{-¹}, and performing the calculation using empirically derived relationships. The ENB content was measured by FTIR spectroscopy in accordance with ASTM D-6047-96. The Mooney viscosity (ML 1+4 @ 125°C) of the polymer products was determined using a Mooney viscometer in accordance with ASTM D-1646.

In these three Examples, various ethylene-propylene copolymers and ethylene-propylene-ENB terpolymers were produced in a batch process under slurry conditions.

Polymerization was conducted in a one liter ZipperClave reactor. As is known to those of skill in the art, this reactor is jacketed and stirred with an explosion proof motor. The reactor was equipped with a series of independent syringe pumps to allow for introduction to the reactor of catalyst and co-catalyst through separate feed streams. The reactor system was interfaced with computer to facilitate direct data acquisition (e.g., polymerization temperature, ethylene flow, etc.).

The catalyst used in these Examples was ethylenebis(4,5,6,7-tetrahydro-1-indenyl)zirconiumdichloride (EBTHI). The cocatalyst used in these Examples was either trityl-tetrakis(pentafluorophenyl)borate (TRIFABA) or a dendrimer.

The ZipperClave reactor was charged with an inert hydrocarbon diluent (350 mL), liquid propylene (200 mL), 5-ethylidene-2-norbornene (ENB, 4 mL), and pressurized with ethylene to a total of 203 psig. After allowing the contents of the reactor to equilibrate to a temperature of 50°C, triisobutylaluminum (TIBA; 4 mL; 0.1 M) and EBTHI (9 mL; 0.16 mM containing TIBA in a molar ratio 1:200 EBTHI:TIBA). After 5 minutes of mixing, the TRIFABA or dendrimer (10 mL; 0.1 mM) was added to the reactor. Ethylene was supplied on demand in order to maintain the initial total pressure in the reactor. The polymerization was carried out for 60 minutes after which ethanol was added to the reactor and the unreacted monomers were flashed off. The polymer was recovered with ethanol and dried in a vacuum oven at 60°C.

Table 1 sets out the cocatalyst used, the molar ratio of boron (i.e., in the cocatalyst) to the catalyst, the polymerization temperature, the catalyst activity, the weight percent of ethylene in the polymer product, the weight percent of ENB in the polymer product and the Mooney viscosity of the polymer product.

As will be apparent to those of skill in the Examples 4 and 5 illustrates the use of a conventional cocatalyst (i.e., TRIFABA). Accordingly, Examples 4 and 5 are outside the scope of the present invention and are provided for compartive purposes only. The results reported in Table 1 clearly demonstrate one of the advantages accruing from the present process. Specifically, under the slurry conditions and conventional catalyst/cocatalyst system used (i.e., Examples 4 and 5), it was not possible to produce a terpolymer having a measurable Mooney viscosity. In contrast, by substituting a dendrimer for the conventional cocatalyst under similar conditions (i.e., Examples 6-9), it was possible to produce a terpolymer having an acceptable level of ethylene and ENB, together with a desirable Mooney viscosity.

While the invention has been described hereinabove with reference to various preferred embodiments and specific Examples, it will be clearly understood by those of skill in the art that modifications to and variations of the preferred embodiments and specific Examples are possible which do not depart from the spirit and scope of the present invention. For example the choice dendrimer (component see of the catalyst system is not particularly restricted. See, for example, any one of:
1. WO 97/32908 [Seyferth et al.];
2. Angew. Chem. 102 (1990) 119-157;
3. Main Group Chemistry News (1995), Volume 3, Number 1, 14-24;
4. Adv. Mater. (1998) 10, No.4, 279-293;
5. Monatshefte für Chemie (1999) 130, 3-14; and
6. Chem. Rev. (1999), 99, 845-880.

Accordingly, it is contemplated that such modifications to and variations of the preferred embodiments and specific Examples are encompassed by the invention.

All publications, patents and patent applications referred to herein are incorporated by reference in their entirety to the same extent as if each individual publication, patent or patent application was specifically and individually indicated to be incorporated by reference in its entirety.

**TABLE 1**

| Example | Borate Type | Molar Ratio B/EBTHI | Polymerization Temp (°C) | Wt% Ethylene | Wt% ENB | Mooney Viscosity |
|---|---|---|---|---|---|---|
| 4 | TRIFABA | 1.1 | 49-74 | 57 | - | Tacky |
| 5 | TRIFABA | 1.1 | 55-70 | 58 | - | Tacky |
| 6 | Dendrimer | 2.8 | 49-62 | 64 | 7 | 30 |
| 7 | Dendrimer | 2.8 | 51-71 | 66 | 5 | 25 |
| 8 | Dendrimer | 1.4 | 51-65 | 61 | 6 | 25 |
| 9 | Dendrimer | 1.4 | 51-62 | 64 | 6 | 23 |
| TRIFABA = trityl-tetrakis(pentafluorophenyl)borate | | | | | | |

## Claims

1. A process for production of an olefin polymer comprising the step of polymerizing an olefin monomer in the presence of a catalyst system comprising:
(a) a transition metal compound of Formula (I):
A_{c}MeR_{d} (I)
wherein:
Me denotes a transition metal of Groups 3-10 of the Periodic Table of the Elements (IUPAC nomenclature 1985);
A is an anionic ligand which is optionally singly- or multiply-bridged;
R is a C₆₋₁₀ aryl or C₁₋₁₀ alkyl which may be optionally singly- or multiply-substituted; and
c, d each represent an integer in the range of from 0 to 6
(b) an organometallic compound of Formula (II)
Me*(Y)ₑ(Z)_{f} (II)
wherein:
Me* represents an element of Group 2 or 13 of the Periodic Table of the Elements (IUPAC nomenclature 1985);
Y can optionally be singly- or multiply-substituted, and is selected from the group consisting of C₁₋₃₀ alkyl, C₅₋₂₀ cycloalkyl and C₇₋₄₀ aryl;
Z is selected from the group consisting of C₁₋₁₀ alkoxy, C₆₋₄₀ aryloxy siloxy, halogen and hydrogen;
e is an integer in the range of from 1 to 3;
f is an integer in the range of from 0 to 2; and
with the proviso that e + f is equal to 2 or 3 depending on the oxidation state of Me*; and
(c) a dendrimeric compound.

2. The process defined in claim 1, wherein the dendrimeric compound comprises carbosilane dendrimeric compounds.

3. The process defined in claim 1, wherein the dendrimeric compound is a compound of the Formula (III)
R¹ ₄₋ᵢMe¹ [(R⁴)ₙX]ᵢ (III),
wherein:
X is Me²R²R³(R^{y})ᵣ;
R¹, R², R³, R^{y} are identical or different, can optionally be singly- or multiply-substituted, and are selected from the group comprising hydrogen, C₅-C₂₀ cycloalkyl, C₁-C₃₀ alkyl, C₇-C₄₀ aryl, C₁-C₁₀ alkoxy, C₆-C₄₀ aryloxy, siloxy and halogen;
R⁴ is optionally a singly- or multiply-substituted alkylene-, alkenylene- or alkynylene diradical, optionally substituted in chain by hetero atoms;
Me¹ represents an element of Group 14 of the Periodic Table of the elements (IUPAC nomenclature);
i is an integer from 2 to 4;
n is an integer from 1 to 20; and
r can be 0 or 1;
with the proviso that, when r = 1, the Me² radical carries a negative formal charge and if there is a negative formal charge on Me² radical this is compensated for by a cation;
or wherein:
X is Me¹R⁵ₐ[(R⁴)ₘMe²R²R³(R^{y})ᵣ]₃₋ₐ;
each of Me¹, Me², R¹, R², R³, R⁴, R^{y}, i, n and r have the meaning above;
R⁵ has the same meaning as any one of R¹, R², R³ and R^{y};
m is identical to or different from n and represents an integer from 1 to 20; and
a is 0, 1 or 2;
or wherein
X is Me¹R⁵ₐ[(R⁴)ₘMe¹R⁶_{b}[(R⁴)ₚMe²R²R³(R^{y})ᵣ]_{3-b}]₃₋ₐ,
each of Me¹, Me², R¹, R², R³, R⁴, R^{y}, i, n, r, m and a have the meaning above;
R⁶ has the same meaning as any one of R¹, R², R³, R^{y} and R⁵
b is 0, 1 or 2; and
p is an integer from 1 to 20.

4. The process defined in any one of claims 1-3, wherein the molar ratio between the organometallic aluminium compound of the Formula (II) and the transition metal compound of the Formula (I) is in the range of from 1:1 to 10000:1.

5. The process defined in any one of claims 1-4, wherein the molar ratio between the dendrimeric compound and the transition metal compound of the Formula (I) is in the range of from 0.01:1 to 10:1.

6. An olefin monomer polymerization catalyst system comprising:
(a) a transition metal compound of Formula (I)
A_{c}MeR_{d} (I)
wherein:
Me denotes a transition metal of Groups 3 to 10 of the Periodic Table of the Elements (IUPAC nomenclature 1985);
A is an anionic ligand which is optionally singly- or multiply-bridged;
R is a C₆₋₁₀ aryl or C₁₋₁₀ alkyl which may be optionally singly- or multiply-substituted; and
c, d each represent an integer in the range of from 0 to 6;
(b) an organometallic compound of Formula (II)
Me*(Y)ₑ(Z)_{f} (II)
wherein:
Me* represents an element of Group 2 or 13 of the Periodic Table of the Elements (IUPAC nomenclature 1985);
Y can optionally be singly- or multiply-substituted, and is selected from the group consisting of C₁₋₃₀ alkyl, C₅₋₂₀ cycloalkyl and C₇₋₄₀ aryl;
Z is selected from the group consisting of C₁₋₁₀ alkoxy, C₆₋₄₀ aryloxy siloxy, halogen and hydrogen;
e is an integer in the range of from 1 to 3;
f is an integer in the range of from 0 to 2; and
with the proviso that e + f is equal to 2 or 3 depending on the oxidation state of Me*; and
(c) a dendrimeric compound.

7. The catalyst system defined in claim 6, wherein the dendrimeric compound comprises carbosilane dendrimeric compounds.

8. The catalyst system defined in claim 7, wherein the dendrimeric compound is a compound of the Formula (III)
R¹ ₄₋ᵢMe¹ [(R⁴)ₙX]ᵢ (III),
wherein:
X is Me²R²R³(R^{y})ᵣ;
R¹, R², R³, R^{y} are identical or different, can optionally be singly- or multiply-C₁-C₁₀ alkyl substituted or C₁-C₁₀ alkoxyl substituted, and are selected from the group consisting of hydrogen, C₅-C₂₀ cycloalkyl, C₁-C₃₀ alkyl, C₇-C₄₀ aryl, C₁-C₁₀ alkoxy, C₆-C₄₀ aryloxy, siloxy and halogen;
R⁴ is optionally a singly- or multiply-substituted alkylene-, alkenylene- or alkynylene diradical, optionally substituted in chain by oxygen or sulfur atoms;
Me¹ represents an element of Group 14 of the Periodic Table of the elements (IUPAC nomenclature 1985);
i is an integer in the range of from 2 to 4;
n is an integer in the range of from 1 to 20; and
r can be 0 or 1;
with the proviso that, when r = 1, the Me² radical carries a negative formal charge and if there is a negative formal charge on Me² radical this is compensated for by a cation;
or wherein:
X is Me¹R⁵ₐ[(R⁴)ₘMe²R²R³(R^{y})ᵣ}₃₋ₐ;
each of Me¹, Me², R¹, R², R³, R⁴, R^{y}, i, n and r have the meaning above;
R⁵ has the same meaning as any one of R¹, R², R³ and R^{y};
m is identical to or different from n and represents an integer in the range of from 1 to 20; and
a is 0, 1 or 2;
or wherein
X is Me¹R⁵ₐ[(R⁴)ₘMe¹R⁶_{b}[(R⁴)ₚMe²R²R³(R^{y})ᵣ]_{3-b}]₃₋ₐ,
each of Me¹, Me², R¹, R², R³, R⁴, R^{y}, i, n, r, m and a have the meaning above;
R⁶ has the same meaning as any one of R¹, R², R³, R^{y} and R⁵;
b is 0, 1 or 2; and
p is an integer in the range of from 1 to 20.

9. The catalyst system defined in any one of claims 6-8, wherein the molar ratio between the compound of the Formula (II) and the transition metal compound of the Formula (I) is in the range of from 1:1 to 10000 : 1.

10. The catalyst system defined in any one of claims 6-9, wherein the molar ratio between the dendrimeric compound and the transition metal compound of the Formula (I) is in the range of from 0.01 : 1 to 10 : 1.

11. The catalyst system defined in any one of claims 6-10, wherein Me¹ comprises silicon.

12. The catalyst system defined in any one of claims 6-11, wherein Me² comprises boron.

13. The catalyst system defined in any one of claims 6-12, wherein X comprises Me²R²R³R^{y}.

14. The catalyst system defined in any one of claims 6-13, wherein X comprises Me¹R⁵ₐ[(R⁴)ₘMe²R²R³R^{y}]₃₋ₐ.
